# FASCICULE DE BREVET EUROPEEN

(11) **EP 2 811 383 B1**
(45) Date de publication et mention de la délivrance du brevet: **03.01.2018**
(21) Numéro de dépôt: 14171229.9
(22) Date de dépôt: 05.06.2014
(51) Int. Cl.: G06F 3/046, G06F 3/0354

(54) **Système, ustensile, appareil, procédé et support d'enregistrement d'informations pour relever la trace dessinée sur un support d'écriture**
System, Werkzeug, Gerät, Verfahren und Informationsaufzeichnungsmedium zur Aufnahme des Spurverlaufs auf einer Schreibunterlage
System, tool, apparatus, method and information recording medium for reading the stroke drawn on a writing medium

(30) Priorité: 07.06.2013 FR 1355265
(43) Date de publication de la demande: 10.12.2014
(73) Titulaire: Commissariat à l'Énergie Atomique et aux Énergies Alternatives, 75015 Paris (FR)
(72) Inventeur: Hautson, Tristan, 38600 Fontaine (FR); Jobert, Timothée, 38000 Grenoble (FR); Vallejo, Jean-Luc, 38000 Grenoble (FR)
(74) Mandataire: GIE Innovation Competence Group

(56) Documents cités:
- US-A1- 2003 095 115
- US-A1- 2013 009 907

## Description

L'invention concerne un système et un procédé de relevé de la trace dessinée sur un support d'écriture. L'invention concerne également un ustensile et un appareil pour ce système de relevé. Elle concerne aussi un support d'enregistrement d'informations pour la mise en oeuvre de ce procédé.

De tels systèmes sont particulièrement utiles pour numériser un dessin réalisé à la main sur le support d'écriture, à l'aide d'un ustensile, par un être humain. Ici, l'ustensile est choisi dans le groupe composé d'un crayon et d'un effaceur.

Par crayon, on désigne ici tout ustensile directement manipulable par la main d'un être humain afin de dessiner sur le support physique d'écriture. Dans certains cas, le crayon laisse une trace sur le support d'écriture. La trace est alors généralement directement visible à l'oeil nu par un être humain. Pour laisser une trace directement visible sur le support, le crayon dépose un liquide ou un solide coloré sur le support d'écriture. Le liquide coloré est typiquement une encre ou de la peinture. Le solide coloré est par exemple du graphite. Dans d'autres cas, le crayon ne dépose pas de liquide ou de solide coloré sur le support d'écriture. Dans ce cas, le crayon est souvent appelé « stylet ». La trace relevée est alors généralement affichée sur un écran.

Par effaceur, on désigne ici tout ustensile directement manipulable par la main d'un être humain afin de dessiner sur un support physique d'écriture une trace qui, lorsqu'elle rencontre une trace laissée par le crayon, efface la trace laissée par ce crayon. L'effacement est un effacement numérique de donnée d'une trace enregistrée à l'aide d'un crayon. Éventuellement, en plus, l'effacement peut aussi être un effacement physique de la trace sur le support. Par exemple, l'effacement physique de la trace sur le support peut provenir d'une réaction chimique et/ou d'un effet mécanique comme l'abrasion. Contrairement au crayon, la trace dessinée par l'effaceur n'est généralement pas visible à l'oeil nu.

Par « dessiner », on englobe ici le fait de parcourir avec une pointe de l'ustensile le support d'écriture pour écrire ou effacer.

Le support d'écriture est une feuille de papier, une toile, un tableau, une tablette ou tout autre support sur lequel on peut dessiner.

Pour correctement relever la trace dessinée par cette pointe sur un support d'écriture, il est important de prendre en compte la pression exercée sur la pointe. Par exemple, la pression exercée sur la pointe permet de détecter précisément l'existence d'un point de contact entre la pointe de l'ustensile et le support d'écriture. Or, à chaque fois que la pointe n'est plus en contact avec le support d'écriture, la trace relevée doit s'interrompre. Il est aussi souvent souhaitable, pour obtenir un relevé plus réaliste, de faire varier la largeur de la trace relevée ou l'intensité lumineuse de la trace relevée en fonction de la pression exercée sur la pointe.

Dans ce contexte, des systèmes connus de relevé de la trace dessinée sur un support d'écriture, comportent :
- un ustensile, choisi dans le groupe composé d'un crayon et d'un effaceur, cet ustensile comprenant :
   - un corps formant un moyen de préhension de l'ustensile par une main d'un utilisateur,
   - une pointe destinée à dessiner la trace à relever, cette pointe étant déplaçable par la force de réaction exercée par le support d'écriture lorsqu'elle vient en appui sur ce support d'écriture, entre :
- une position saillante, et
- une position rétractée dans laquelle la pointe est plus enfoncée à l'intérieur du corps que dans la position saillante,
   - des moyens de rappel sollicitant en permanence la pointe vers sa position saillante,
   - un premier et un second aimants permanents distincts, le premier aimant permanent étant mécaniquement relié à la pointe de manière à être déplacé en translation ou en rotation, par rapport au second aimant permanent, au fur et à mesure que la pointe est déplacée entre ses positions saillante et rétractée,
- un appareil apte à enregistrer des positions successives d'un point de contact entre la pointe et le support pour former le relevé de la trace dessinée, et à utiliser une valeur d'une grandeur physique représentative de la pression exercée sur la pointe de l'ustensile pour commander ou compléter cet enregistrement.

Par exemple, un tel système est divulgué dans la demande de brevet WO 02/043045 ou la demande US2003/095115A.

Dans cette demande, la position de la pointe du crayon est déterminée en mesurant, par trigonométrie, la position d'un aimant permanent logé à l'intérieur de ce crayon. Pour cela, trois magnétomètres tri-axes disposés sur le support d'écriture sont utilisés. Ce système est particulièrement avantageux en ce que, pour localiser le crayon, ce dernier est uniquement équipé d'aimants permanents et ne nécessite donc pas d'être alimenté à partir d'une source d'alimentation. Un tel crayon qui n'a pas besoin d'être alimenté est qualifié de « passif ». Toutefois, dans la demande WO 02/043045, lorsque l'inclinaison du crayon est modifiée, cela entraîne une modification de l'amplitude du champ magnétique mesurée par les magnétomètres tri-axes ce qui se traduit par une modification de la position relevée de la pointe du crayon. Ainsi, modifier l'inclinaison du crayon dans le système de WO 02/043045 peut entraîner l'apparition d'un espace intempestif dans la trace relevée par ce système.

De plus, pour compléter le relevé de la trace en fonction d'une grandeur physique représentative de la pression exercée sur la pointe, et non pas simplement détecter un point de contact, la demande WO 02/043045 enseigne, en référence aux figures 14 et 15, qu'il faut intégrer dans le crayon un capteur de pression et un émetteur pour transmettre la pression mesurée. Ainsi, dès que l'on cherche à déterminer la pression exercée sur la pointe du crayon, le crayon ne peut plus être « passif ».

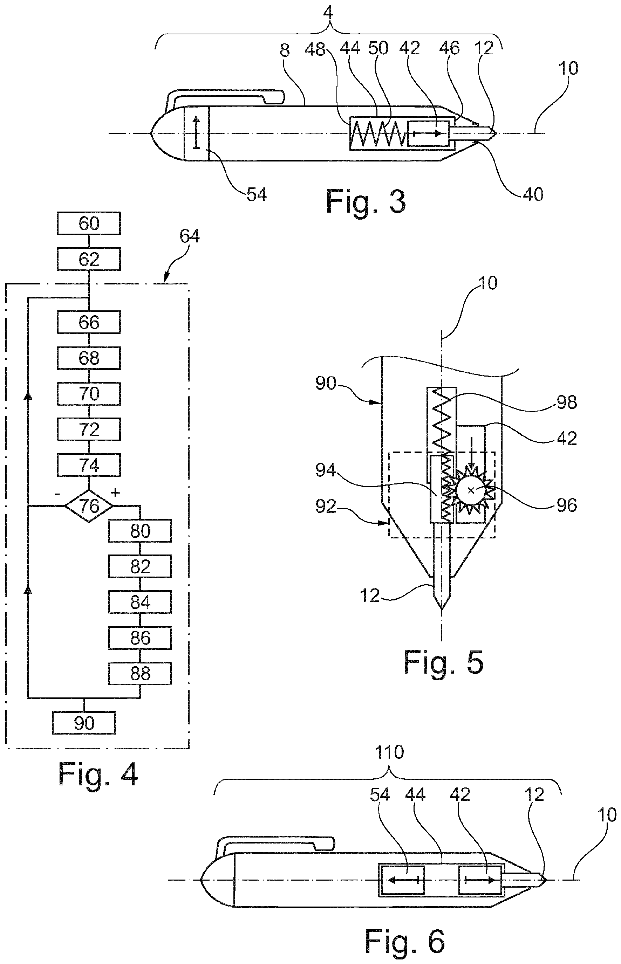

On notera aussi que, par ailleurs, la demande WO 02/043045 prétend qu'avec un crayon passif équipé de deux aimants permanents, il est possible de détecter l'instant où la pointe du crayon entre en contact avec le support d'écriture tout en conservant un crayon passif. Plus précisément, dans le mode de réalisation de la figure 6, la demande WO 02/043045 décrit que le contact de la pointe avec le support d'écriture provoque l'accolement du premier aimant permanent sur le second aimant permanent de sorte que les premier et second aimants permanents ne forment plus qu'un seul gros aimant permanent rayonnant un champ magnétique d'intensité beaucoup plus grande. Sur la figure 6, les premier et second aimants permanents portent les références, respectivement, 62 et 64 C'est cette variation dans l'intensité du champ magnétique rayonné qui est mesurée et permet de détecter un point de contact. Toutefois, ce mode de réalisation ne marche pas. En effet, l'augmentation du champ magnétique est due au fait que l'aimant 64 se rapproche du plan de la feuille et donc des magnétomètres tri-axes. Or la même variation de l'amplitude du champ magnétique peut être obtenue en modifiant l'inclinaison du crayon par rapport au plan de la feuille. Il n'est donc pas possible de discerner une variation de l'amplitude mesurée du champ magnétique causée par le rapprochement des aimants 62 et 64 d'une variation de cette amplitude mesurée causée par l'inclinaison du crayon. Ainsi, en pratique le mode de réalisation décrit dans la figure 6 n'est donc pas utilisable pour détecter un point de contact entre la pointe du crayon et une feuille.

De l'état de la technique est également connu de : US2013/009907A1.

L'invention vise à proposer un système de relevé de la trace dessinée sur le support d'écriture dans lequel une grandeur physique représentative de la pression exercée sur la pointe du crayon est utilisée tout en conservant la possibilité d'avoir un crayon passif. Elle a donc pour objet un système de relevé conforme à la revendication 1.

Dans le système ci-dessus, le déplacement du premier aimant permanent se fait à l'encontre de la force de rappel des moyens de rappel. Par conséquent, le déplacement du premier aimant permanent par rapport au second aimant permanent est une grandeur physique représentative de la pression exercée sur la pointe de l'ustensile.

Grâce au nombre élevé de magnétomètres tri-axes, à la position connue de ces magnétomètres les uns par rapport aux autres et au calculateur programmé à cet effet, le déplacement du premier aimant permanent par rapport au second aimant permanent est estimé. On obtient ainsi une valeur qui varie en fonction de la pression exercée sur la pointe de l'ustensile sans qu'il soit nécessaire d'équiper cet ustensile avec un capteur de pression ou avec des moyens de transmission de la pression mesurée par ce capteur vers un calculateur électronique externe. Le système de relevé d'une trace ci-dessus peut donc à la fois utiliser un ustensile passif et utiliser la valeur d'une grandeur physique représentative de la pression exercée sur la pointe.

Les modes de réalisation de ce système peuvent comporter une ou plusieurs des caractéristiques des revendications dépendantes de système.

Ces modes de réalisation du système présentent en outre les avantages suivants :
- utiliser le même aimant pour déterminer la position de la pointe et déterminer la valeur de la grandeur physique représentative de la pression exercée sur cette pointe, simplifie la réalisation du système et permet d'éviter la génération intempestive d'espaces dans la trace relevée ;
- utiliser un guide qui permet de maintenir le premier aimant permanent centré sur l'axe longitudinal de l'ustensile, permet de mesurer l'orientation de cet axe en s'affranchissant des erreurs de mesure sur les directions des moments magnétiques des aimants permanents logés à l'intérieur du crayon ;
- utiliser deux aimants permanents dont les directions des moments magnétiques sont décalées angulairement permet en plus de relever l'angle de roulis de l'ustensile autour d'un axe longitudinal sans pour autant complexifier la réalisation de cet ustensile.

L'invention a également pour objet un ustensile conforme à la revendication 5.

Les modes de réalisation de cet ustensile peuvent comporter une ou plusieurs des caractéristiques des revendications dépendantes d'ustensile.

Ces modes de réalisation de l'ustensile présentent en outre les avantages suivants :
- utiliser les premier et second aimants permanents en plus pour réaliser les moyens de rappel de la pointe permet de simplifier la réalisation de l'ustensile.

L'invention a également pour objet un appareil pour le système de relevé ci-dessus conforme à la revendication 8.

L'invention a également pour objet un procédé de relevé de la trace dessinée sur un support d'écriture conforme à la revendication 9.

Les modes de réalisation de ce procédé peuvent comporter une ou plusieurs des caractéristiques des revendications dépendantes de procédé.

Enfin, l'invention a également pour objet un support d'enregistrement d'informations comportant des instructions pour la réalisation des étapes d) et e) du procédé ci-dessus, lorsque ces instructions sont exécutées par un calculateur électronique.

L'invention sera mieux comprise à la lecture de la description qui va suivre, donnée uniquement à titre d'exemple non limitatif et faite en se référant aux dessins sur lesquels :
- la figure 1 est une illustration schématique d'un système de relevé de la trace de la pointe d'un crayon sur un support d'écriture ;
- la figure 2 est une illustration schématique d'une partie d'un réseau de magnétomètres utilisé dans le système de la figure 1 ;
- la figure 3 est une illustration schématique d'un crayon utilisé dans le système de la figure 1 ;
- la figure 4 est un organigramme d'un procédé de relevé de la trace de la pointe d'un crayon sur un support d'écriture à l'aide du système de la figure 1 ;
- les figures 5 et 6 sont des illustrations schématiques de deux autres modes de réalisation d'un crayon utilisable dans le système de la figure 1.

Dans ces figures, les mêmes références sont utilisées pour désigner les mêmes éléments.

Dans la suite de cette description, les caractéristiques et fonctions bien connues de l'homme du métier ne sont pas décrites en détails.

L'invention va maintenant être décrite dans le cas particulier où l'ustensile est un crayon.

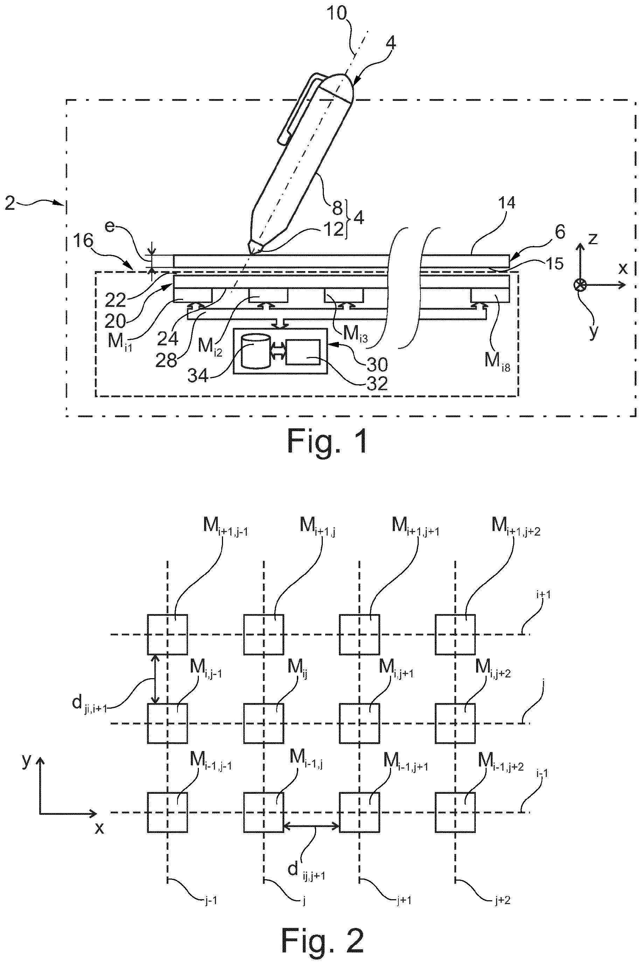

La figure 1 représente un système 2 de relevé de la trace de la pointe d'un crayon 4 sur un support d'écriture 6.

Le crayon 4 est librement déplaçable directement par la main d'un être humain dans un repère XYZ fixé sans aucun degré de liberté au système 2. Ici, les directions X et Y de ce repère sont horizontales et la direction Z est verticale. Par la suite, les termes « au-dessus », « en dessous », « supérieur », « inférieur » sont relatifs à cette direction verticale Z.

Le crayon 4 pèse typiquement moins de 1 kg et, de préférence, moins de 200g ou 100g. Les dimensions de ce crayon sont également suffisamment réduites pour qu'il soit tenu à l'aide d'une seule main par un être humain. Le crayon 4 présente généralement une forme oblongue.

Ici, le crayon 4 est choisi dans le groupe composé d'un stylo à bille, d'un stylo à encre, d'un stylo à plume, d'un feutre, d'un crayon bois, d'un marqueur, d'un surligneur, d'un calame, d'une plume, d'un pinceau. Dans ce mode de réalisation, à titre d'illustration, le crayon 4 est un stylo à plume.

Le crayon 4 comporte un corps 8 oblong s'étendant le long d'un axe longitudinal 10. Ce corps sert de moyen de préhension du crayon par la main de l'utilisateur qui souhaite dessiner sur le support 6.

Par exemple, le corps 8 est entièrement réalisé dans des matériaux non magnétiques, c'est-à-dire des matériaux ne présentant aucune propriété magnétique mesurable par le système 2.

Le crayon 4 comporte aussi une pointe 12 qui dépose un liquide ou un solide coloré sur une face supérieure 14 du support d'écriture 6. A cet effet, par exemple, la pointe 12 est destinée à être trempée dans un réservoir de liquide coloré. Le liquide coloré est par exemple de l'encre. Dans le cas particulier d'un stylo à plume, la pointe 12 est la plume de ce stylo. La pointe 12 est située sur l'axe 10 à l'extrémité inférieure du crayon 4. Dans ce mode de réalisation, la pointe 12 ne présente aucune symétrie de révolution autour de l'axe 10. Par conséquent, la trace laissée par cette pointe 12 sur le support 6 dépend de l'angle de roulis du crayon 4 autour de l'axe 10. Dans le cas de la plume d'un stylo à plume, celle-ci ne peut déposer correctement de l'encre sur le support 6 que si elle est correctement orientée par rapport au support 6.

Le crayon 4 comporte deux objets magnétiques. Ces objets magnétiques et le crayon 4 sont décrits plus en détail en référence à la figure 3.

Par exemple, le support 6 est un support d'écriture conventionnel présentant une épaisseur e non nulle dans la direction Z. Ici, l'épaisseur e est supposée constante sur toute la face 10. L'épaisseur e peut être quelconque. En particulier, cette épaisseur e peut être très petite, c'est-à-dire inférieure à 1 mm ou à 0,5 mm dans le cas d'une feuille de papier ou d'une toile. L'épaisseur e peut aussi être très grande, c'est-à-dire supérieure à 5 mm dans le cas d'un cahier ou d'un bloc note.

Le support 6 peut être rigide ou souple. Par exemple, un support rigide est une plaque de verre ou de métal. Un support souple est une feuille de papier.

La surface de la face 14 est suffisamment grande pour permettre d'écrire ou de dessiner. A cet effet, elle est typiquement supérieure à 6 ou 20 ou à 100 cm².

Le support 6 présente également une face inférieure 15 du côté opposé à la face 10.

Le système 2 comporte un appareil 16 apte, à partir de la position et de l'orientation mesurées des objets magnétiques du crayon 4 :
- à localiser la pointe 12 dans le repère XYZ, et
- à déterminer la valeur d'une grandeur physique représentative de la pression exercée sur la pointe 12.

Sur la figure 1, les traits ondulés verticaux indiquent qu'une partie de l'appareil 16 n'a pas été représentée.

L'appareil 16 comprend une tablette 20 présentant une face avant 22 d'appui et une face arrière 24. Cette tablette est typiquement dépourvue de circuit électrique ou électronique. Elle est par exemple réalisée d'un seul bloc de matière.

La face 22 s'étend horizontalement. La face inférieure 15 du support 6 est directement déposée sur la face 22. La surface de la face 22 est suffisamment grande pour permettre d'écrire ou de dessiner. Typiquement, elle est supérieure à 20 ou 100 cm².

La tablette 20 est réalisée dans un matériau rigide non magnétique. Par exemple, le module de Young de la tablette 20 est supérieur à 2 ou 10 ou 50 GPa à 25°C. De plus, son épaisseur est suffisante pour ne pas se plier sous la pression exercée par la main de l'utilisateur lorsque celui-ci écrit à l'aide du crayon 4 sur le support 6. Par exemple, la tablette 20 est une plaque de verre dont l'épaisseur est supérieure à 1 mm ou 4 mm.

L'appareil 16 comporte un réseau de N magnétomètres tri-axes Mᵢⱼ. Ce réseau permet de localiser les deux objets magnétiques du crayon 4 dans le repère XYZ. Par localisation d'un objet magnétique, on entend ici la détermination de la position x, y, z de cet objet dans le repère XYZ et aussi son orientation par rapport aux directions X, Y et Z du repère XYZ. Par exemple, l'orientation de l'objet magnétique est représentée par les angles θₓ, θ_{y} et θ_{z} du moment magnétique de cet objet, respectivement, par rapport aux axes X, Y et Z du repère.

Typiquement, N est supérieur à cinq et, de préférence, supérieur à seize ou trente-deux. Ici, N est supérieur ou égal à soixante-quatre.

Dans ce mode de réalisation, les magnétomètres Mᵢⱼ sont alignés en lignes et en colonnes pour former une matrice. Ici, cette matrice comporte huit lignes et huit colonnes. Les indices i et j identifient, respectivement, la ligne et la colonne de cette matrice à l'intersection de laquelle se trouve le magnétomètre Mᵢⱼ. Sur la figure 1, seuls les magnétomètres Mᵢ₁, Mᵢ₂, Mᵢ₃, Mᵢ₄ et Mᵢ₈ d'une ligne i sont visibles. La position des magnétomètres Mᵢⱼ les uns par rapport aux autres est décrite plus en détail en référence à la figure 2.

Chaque magnétomètre Mᵢⱼ est fixé sans aucun degré de liberté aux autres magnétomètres. A cet effet, les magnétomètres Mᵢⱼ sont fixés sans aucun degré de liberté sur la face arrière 24 de la tablette 20.

Chaque magnétomètre Mᵢⱼ mesure la direction et l'intensité du champ magnétique généré par des objets magnétiques. Pour cela, chaque magnétomètre Mᵢⱼ mesure la norme de la projection orthogonale du champ magnétique généré par les objets magnétiques au niveau de ce magnétomètre Mᵢⱼ sur au moins trois axes de mesure de ce magnétomètre. Ici, ces trois axes de mesure sont orthogonaux entre eux. Par exemple, les axes de mesure de chacun des magnétomètres Mᵢⱼ sont, respectivement, parallèles aux directions X, Y et Z du repère. La sensibilité du magnétomètre Mᵢⱼ est par exemple inférieure à 10⁻⁶T ou 10⁻⁷T.

Chaque magnétomètre Mᵢⱼ est raccordé par l'intermédiaire d'un bus 28 de transmission d'informations à une unité de traitement 30.

L'unité de traitement 30 est apte à mettre en oeuvre le procédé de la figure 4. En particulier, elle est capable de déterminer la position et l'orientation, dans le repère XYZ, des deux objets magnétiques simultanément présents dans le crayon 4 à partir des mesures des magnétomètres Mᵢⱼ. A cet effet, l'unité 30 comporte un calculateur électronique 32 programmable apte à exécuter des instructions enregistrées sur un support d'enregistrement d'informations. L'unité 30 comporte donc aussi une mémoire 34 contenant les instructions nécessaires pour l'exécution par le calculateur 32 du procédé de la figure 4. Ici, chaque objet magnétique contenu dans le crayon 4 est assimilé à un dipôle magnétique. L'unité 30 implémente donc un modèle mathématique M₂ associant chaque mesure d'un magnétomètre Mᵢⱼ aux positions, orientations et amplitudes des moments magnétiques de deux dipôles magnétiques dans le repère XYZ. Ce modèle M₂ se présente sous la forme d'un système d'équations dans lequel un premier jeu de variables représente les positions et orientations des deux dipôles magnétiques ainsi que les amplitudes des moments magnétiques de ces dipôles. Un second jeu de variables représente les mesures des magnétomètres Mᵢⱼ. Pour obtenir, les positions, orientations et amplitudes des moments magnétiques des deux dipôles magnétiques, les variables du premier jeu sont les inconnues et les valeurs des variables du second jeu sont connues. Ce modèle est typiquement construit à partir des équations physiques de l'électromagnétisme. Ce modèle est paramétré par les distances connues entres les magnétomètres Mᵢⱼ. Pour construire ce modèle, chaque aimant permanent est approximé par un dipôle magnétique. Cette approximation n'introduit que très peu d'erreurs si la distance entre l'aimant permanent et le magnétomètre Mᵢⱼ est supérieure à 2L et, de préférence, supérieure à 3L, où L est la plus grande dimension de l'aimant permanent. Typiquement, L est inférieur à 20cm et, de préférence, inférieur à 10 ou 5cm.

Ici, le modèle M₂ est non linéaire. L'unité 30 le résout en mettant en oeuvre un algorithme d'estimation de sa solution. Par exemple, l'algorithme utilisé est un filtre de Kalman d'ensemble plus connu sous le terme anglais de « Unscented Kalman Filter ».

Étant donné que chaque dipôle magnétique est caractérisé par trois variables pour connaître sa position, deux variables pour connaître son orientation et une variable pour connaître l'amplitude de son moment magnétique, il faut au minimum quatre magnétomètres Mᵢⱼ pour localiser deux dipôles magnétiques. De préférence, N est choisi cinq, dix ou vingt fois supérieur à ce nombre minimum de magnétomètres pour avoir des mesures redondantes. La redondance des mesures permet d'améliorer la précision de la localisation des dipôles.

L'unité 30 est également capable d'acquérir et d'enregistrer la trace laissée par la pointe 12 sur le support 6 à partir des différentes positions déterminées pour cette pointe.

La figure 2 représente une partie des magnétomètres Mᵢⱼ de l'appareil 16. Ces magnétomètres Mᵢⱼ sont alignés en lignes i parallèles à la direction X. Ces magnétomètres sont également alignés en colonnes j parallèles à la direction Y pour former une matrice. Les lignes i et les colonnes j sont disposées dans l'ordre des indices croissants.

Le centre du magnétomètre Mᵢⱼ se trouve à l'intersection de la ligne i et de la colonne j. Le centre du magnétomètre correspond au point où le champ magnétique est mesuré par ce magnétomètre. Ici, les indices i et j appartiennent à l'intervalle [1 ; 8].

Les centres de deux magnétomètres Mᵢⱼ et M_{i,j+1} immédiatement consécutifs le long d'une ligne i sont séparés par une distance d_{i,j},ⱼ₊₁. De façon similaire, le centre de deux magnétomètres Mᵢⱼ et Mᵢ₊₁,,ⱼ immédiatement consécutifs le long d'une même colonne j sont séparés par une distance d_{j,i},ᵢ₊₁.

Ici, quelle que soit la ligne i, la distance d_{i,j},ⱼ₊₁ est la même. Cette distance est donc notée dⱼ. De façon similaire, quelle que soit la colonne j, la distance d_{j,i},ᵢ₊₁ entre deux magnétomètres est la même. Cette distance est donc notée dᵢ.

Dans ce mode de réalisation particulier, les distances dᵢ et dⱼ sont toutes les deux égales à d.

Typiquement, la distance d est comprise entre 1 et 4 cm lorsque :
- la puissance de l'aimant permanent est de 0,5 A.m²,
- la sensibilité des magnétomètres est de 4*10⁻⁷T, et
- le nombre de magnétomètres Mᵢⱼ est de soixante-quatre.

La figure 3 représente plus en détail le crayon 4. Ce crayon 4 comporte la pointe 12 montée à coulissement à l'intérieur d'un orifice 40 ménagé dans une extrémité distale du corps 8. La pointe 12 coulisse le long de l'axe 10 entre une position saillante (représentée sur la figure 3) et une position rétractée. Dans la position saillante, la pointe 12 fait saillie au-delà du corps 8 de manière à pouvoir venir en contact avec le support 6 pour dessiner une trace. Dans la position rétractée, la pointe 12 est plus enfoncée à l'intérieur du corps 10 que dans la position saillante.

L'extrémité de la pointe 12 cachée à l'intérieur du corps 8 est fixée sans aucun degré de liberté à un objet magnétique 42.

L'objet 42 présente un moment magnétique mesurable par l'appareil 16. Typiquement, il est réalisé en matériau ferromagnétique ou ferrimagnétique. Ici, l'objet 42 est un aimant permanent. Cet aimant 42 présente un moment magnétique non nul même en absence de champ magnétique extérieur. Par exemple, le champ magnétique coercitif de cet aimant 42 est supérieur à 100 A.m⁻¹ ou 500 Am⁻¹. La puissance de l'aimant 42 est typiquement supérieure à 0,01 A.m² ou 0,1 A.m².

L'aimant 42 a ici la forme d'un barreau rectiligne s'étendant le long de l'axe 10. La section transversale de ce barreau est, par exemple, rectangulaire. La plus grande dimension de cet aimant 42, c'est-à-dire ici sa longueur L, est typiquement inférieure à 5 cm et, de préférence, inférieure à 3 cm ou 2 cm. Le moment magnétique de l'aimant 42, représenté par une flèche sur la figure 3, est confondu avec l'axe 10 et dirigé vers la pointe 12.

L'aimant 42 est déplacé en translation le long de l'axe 10 par la pointe 12. A cet effet, le crayon 4 comporte un guide 44 à l'intérieur duquel coulisse l'aimant 42. Ce guide 44 autorise uniquement la translation de l'aimant 42 le long d'une portion de l'axe 10. Par exemple, il s'agit d'un tube creux dont la section transversale est légèrement supérieure à celle de l'aimant 42.

Pour limiter la course de l'aimant 42, le guide 44 comporte deux butées 46 et 48. L'aimant 42 est en appui sur la butée 46 quand la pointe 12 est dans sa position saillante, c'est-à-dire lorsque aucune pression susceptible d'enfoncer cette pointe 12 à l'intérieur du corps 8 ne s'exerce. Cette butée 46 empêche que la pointe 12 sorte du corps 8 plus en avant que sa position saillante.

La butée 48 est située du côté opposé à la butée 46. La butée 48 est suffisamment éloignée de la butée 46 pour qu'en fonctionnement normal l'aimant 42 ne puisse pas venir en appui sur la butée 48.

Des moyens 50 de rappel pour solliciter en permanence la pointe 12 vers sa position saillante sont prévus à l'intérieur du corps 8. Ces moyens de rappel sont ici réalisés à l'aide d'un matériau élastiquement déformable ne consommant pas d'énergie électrique pour fonctionner. Ici, les moyens 50 de rappel comportent un ressort tel qu'un ressort hélicoïdal. Ce ressort est en appui en permanence, d'un côté sur la butée 48 et de l'autre côté sur l'extrémité de l'aimant 42 située du côté opposé à la pointe 12.

Le crayon 4 comporte également un second objet magnétique 54. Ici, l'objet 54 est fixé sans aucun degré de liberté sur le corps 8 à une distance suffisamment éloignée de l'aimant 42 pour que l'aimant 42 ne puisse pas venir en contact avec cet objet 54 même lorsque la pointe est dans sa position enfoncée. Typiquement, la distance minimale qui sépare les aimants 42, 54 est supérieure ou égale et, de préférence 1,5 fois supérieur, à la distance d qui sépare deux magnétomètres Mᵢⱼ immédiatement consécutifs. Par exemple, la distance la plus courte qui sépare l'objet 54 de l'aimant 42 est supérieure est ici supérieure à 5 cm.

Dans ce mode de réalisation, l'objet 54 est également un aimant permanent. Par exemple, cet aimant permanent est identique à l'aimant 42 sauf que son moment magnétique, représenté par une flèche sur la figure 3, fait un angle β avec le moment magnétique de l'aimant 42 dans un plan contenant les directions de ces deux moments magnétiques. Typiquement, l'angle β est compris entre 5 et 175° et, de préférence, entre 45 et 135°. Ici, l'angle β est égal à 90° à plus ou moins 5° près.

Le fonctionnement du système 2 va maintenant être expliqué en référence au procédé de la figure 4.

Le procédé de la figure 4 débute par une étape 60 de fourniture du système 2 de relevé de la trace dessinée.

Puis, lors d'une étape 62, le système 2 est initialisé. En particulier, lors de cette étape 62, la distance d₀ séparant les aimants permanents 42 et 54 en absence de pression sur la pointe 12 est enregistrée dans la mémoire 34. Cette distance d₀ est égale à la distance entre les positions mesurées par l'appareil 16 des aimants 42 et 54 en absence de pression sur la pointe 12. Cette distance d₀ est soit déterminée expérimentalement à l'aide de l'appareil 16, soit calculée à partir des dimensions du crayon 4 et des positions des aimants permanents 42 et 54. Cette distance peut être facilement mise à jour expérimentalement à l'aide de l'appareil 16 car elle correspond à la distance maximale entre les aimants. Dans ce mode de réalisation, on enregistre également une distance dₘᵢₙ correspondant à la distance minimale qui peut exister entre les deux aimants 42, 54 lors de l'utilisation du crayon. Cette distance dₘᵢₙ est déterminée de la même façon que la distance d₀.

Lors de l'étape 62, un seuil Sₚ de début de pression sur la pointe est également enregistré dans la mémoire 34. Enfin, lors de cette étape, la distance dₚ constante qui sépare l'extrémité distale de la pointe 12 de la position du dipôle magnétique correspondant à l'aimant 42 est également enregistrée dans la mémoire 34. Cette distance est mesurée directement sur le crayon 4.

Après son initialisation, on procède à une phase 64 d'utilisation du système 2 pour relever la trace dessinée par un utilisateur à l'aide du crayon 4.

Lors de cette phase, les champs magnétiques générés par les aimants permanents 42 et 54 sont mesurés, lors d'une étape 66, par les magnétomètres Mᵢⱼ.

Ensuite, lors d'une étape 68, ces mesures sont acquises par l'unité 30 de traitement.

Lors d'une étape 70, l'unité 30 détermine à partir des mesures acquises deux positions P₁ et P₂ ainsi que les coordonnées de deux vecteurs M₁ et M₂. Les positions P₁ et P₂ sont les coordonnées dans le repère XYZ du centre des dipôles, respectivement, D₁ et D₂. Ces dipôles D₁ et D₂ correspondent, respectivement, aux aimants permanents 42 et 54. Les normes des vecteurs M₁ et M₂ sont égales aux amplitudes mesurées des moments magnétiques, respectivement, des aimants permanents 42 et 54. Les directions des vecteurs M₁ et M₂ sont confondues avec les directions des moments magnétiques, respectivement, des aimants permanents 42 et 54.

Lors d'une étape 72, l'unité 30 calcule la position relative de l'aimant 42 par rapport à la position de l'aimant 54. Ici, cette position relative est donnée par la distance dₐ entre les aimants 42 et 54. A cet effet, l'unité 30 calcule la norme de la différence entre les positions P₁ et P₂. Par exemple, la distance dₐ est calculée à l'aide de la relation suivante : dₐ = ∥P₁ - P₂∥, où ∥...∥ est une norme telle que la norme euclidienne. Cette distance dₐ est représentative de la pression exercée sur la pointe 12.

Ensuite, lors d'une étape 74, l'unité 30 convertit la distance dₐ en une valeur Pᵣ représentative de l'écart qui existe entre la position relative actuelle et la position relative initiale. La position relative initiale est la position relative qui est mesurée en absence de pression sur la pointe 12. Ici, la valeur Pᵣ est calculée à l'aide de la relation suivante : Pᵣ = (d₀ - dₐ) / (do - dₘᵢₙ).

Lors d'une étape 76, l'unité 30 compare la valeur Pᵣ au seuil Sₚ. Si valeur Pᵣ est inférieure au seuil Sₚ, alors aucun point de contact entre la pointe 12 et le support 6 n'est détecté et aucun point de la trace n'est relevé. On retourne alors directement à l'étape 66.

Dans le cas contraire, c'est-à-dire si la valeur Pᵣ dépasse le seuil Sₚ, lors d'une étape 80, l'unité 30 détecte un point de contact entre la pointe 12 et le support 6.

En réponse, lors d'une étape 82, l'unité 30 calcule l'orientation de l'axe 10 uniquement à partir des positions P₁ et P₂. Par exemple, lors de l'étape 82, l'unité 30 établit l'équation définissant la position de l'axe 10 dans le repère XYZ sachant que cet axe 10 passe par les positions P₁ et P₂ déterminées lors de l'étape 70.

Lors d'une étape 84, l'unité 30 enregistre la position du point de contact entre la pointe 12 et le support 6 dans une base de données contenant chaque position relevée. L'ensemble des positions enregistrées forme la trace relevée. La position du point de contact correspond aux coordonnées du point situé sur l'axe 10, à la distance dₚ de la position P₁ et du côté de l'aimant 42 opposé au côté où se trouve l'aimant 54.

Lors d'une étape 86, l'unité 30 calcule l'angle α de roulis du crayon 4 autour de l'axe 10 à partir des directions déterminées des moments magnétiques des aimants 42 et 54. L'angle α est mesuré par rapport à une position de référence préenregistrée. La valeur de cet angle α est alors associée, dans la base de données, à la position enregistrée lors de l'étape 84.

Lors d'une étape 88, l'unité 30 complète la position enregistrée lors de l'étape 84 en y associant une épaisseur de trait ou une intensité lumineuse ou une transparence du trait relevé. L'épaisseur de trait et/ou l'intensité lumineuse et/ou la transparence sont ici déterminées en fonction de la valeur Pᵣ calculée lors de l'étape 74. La transparence du trait est par exemple réglée selon le procédé connu sous le terme de « Alpha blending ».

Après l'étape 88, le procédé retourne à l'étape 66 pour relever le point suivant de la trace dessinée.

Enfin, lors d'une étape 90, l'unité 30 commande l'affichage, au fur et à mesure que la trace est relevée, de cette trace sur un écran. Typiquement, lors de l'affichage, l'épaisseur et l'intensité lumineuse de cette trace sont réglés en fonction de la valeur Pᵣ ainsi que de l'angle de roulis α.

La figure 5 représente partiellement un crayon 90. Ce crayon 90 est identique au crayon 4 sauf que l'aimant permanent 42 est déplacé en rotation et non pas en translation quand la pointe 12 se déplace en translation le long de l'axe 10. Pour cela, le crayon 90 comporte un mécanisme 92 apte à transformer la translation de la pointe 12 en une rotation de l'aimant 42. De très nombreux mécanismes permettant de faire une telle conversion sont connus. A titre d'illustration uniquement, ce mécanisme 92 peut comporter :
- une crémaillère 94 s'étendant le long de l'axe 10 et fixée sans aucun degré de liberté à l'extrémité de la pointe 12 située à l'intérieur du corps 8 du crayon, et
- une roue crantée 96 entraînée en rotation par le déplacement de la crémaillère 94.

Dans ce mode de réalisation, l'aimant permanent 42 est fixé sans aucun degré de liberté sur la roue 96. Comme dans le mode de réalisation précédent du crayon 4, le crayon 90 comprend des moyens 98 de rappel qui sollicitent en permanence la pointe 12 vers sa position saillante. Par exemple ici, ces moyens de rappel sont également formés par un ressort.

Quand la roue 96 tourne, la direction du moment magnétique de l'aimant 42 tourne également. Ainsi, l'orientation relative du moment magnétique de l'aimant 42 par rapport à l'orientation du moment magnétique de l'aimant 54 est représentative de la pression exercée sur la pointe 12. Cette orientation relative est par exemple définie par l'angle θ entre les directions des moments magnétiques des aimants 42 et 54.

Le fonctionnement du système de relevé d'une trace à l'aide du crayon 90 est similaire à celui décrit en référence à la figure 4 sauf que les étapes 72 et 74 sont adaptées pour calculer et utiliser l'angle θ en tant que valeur représentative de la pression exercée sur la pointe 12 et non plus la distance dₐ.

Par exemple, lors de l'étape 62, une table permettant de convertir chaque valeur de l'angle θ en une valeur Pᵣ représentative de l'écart entre la valeur initiale de l'angle θ et sa valeur actuellement calculée est enregistrée dans la mémoire 34. L'angle θ peut être supérieur à 360° dans le cas où l'aimant 42 effectue plusieurs tours. Dans ce cas l'unité 30 est programmée pour détecter les passages brusques de 360° à 0° de manière à compter le nombre de tours effectués.

Lors de l'étape 72, la valeur de l'angle θ entre les directions des moments magnétiques mesurés est calculée puis convertie, lors de l'étape 74, en une valeur Pᵣ en utilisant la table enregistrée lors de l'étape 62. Dans ce mode de réalisation, si l'aimant permanent 42 est excentré par rapport à l'axe 10, alors l'orientation et la position de l'axe longitudinal peuvent être déterminées en considérant que l'axe 10 passe par la position P₂ et une position P'₁. La position P'₁ est déduite automatiquement de la position P₁ en la décalant d'une valeur prédéterminée dans la direction du moment magnétique de l'aimant 54. Cela revient donc à utiliser la direction du moment magnétique de l'aimant 54.

La figure 6 représente un crayon 110 identique au crayon 4 sauf que les aimants 42 et 54 sont également utilisés pour former les moyens de rappel de la pointe 12 vers sa position saillante.

Par exemple, l'aimant 54 est fixée sans aucun degré de liberté à l'intérieur du guide 44 contre la butée 48. Son moment magnétique est dirigé de manière à ce qu'il soit parallèle au moment magnétique de l'aimant 42 mais de direction opposée. Ainsi, les pôles en vis-à-vis des aimants 42 et 54 sont de même polarité et se repoussent mutuellement. Ceci permet de solliciter en permanence la pointe 12 vers sa position saillante.

Dans ce mode de réalisation, étant donné que les moments magnétiques des aimants 42 et 54 sont tous deux confondus avec l'axe 10, l'angle de roulis du crayon 110 n'est pas déterminé, par exemple si ce n'est pas indispensable à cause de la forme de la pointe 12, ou est déterminé par un autre moyen que celui précédemment décrit.

De nombreux autres modes de réalisation sont possibles. Par exemple, le ou les aimants peuvent être logés aussi bien à l'intérieur qu'à l'extérieur du corps du crayon.

Les moyens de rappel de la pointe 12 vers sa position saillante peuvent aussi être réalisés à l'aide d'un bloc en matériau élastomère, ou de tout autre moyen capable de solliciter en permanence la pointe 12 vers sa position saillante avec un force fonction du déplacement de cette pointe.

Dans le cas du mode de réalisation de la figure 6, le plus petit angle entre les directions des moments magnétiques des aimants 42, 54, mesuré dans un plan contenant ces deux directions, n'a pas besoin d'être nul pour former les moyens de rappel de la pointe 12. Ainsi, en variante, l'un des deux aimants 42, 54 est désaxé de manière à ce que le plus petit angle entre les directions des moments magnétiques de ces aimants soit compris entre 1° et 20°. Ce faible angle entre les directions des moments magnétiques permet de conserver les pôles de même polarité des aimants 42 et 54 tournés l'un vers l'autre et donc d'obtenir une force de répulsion suffisante pour solliciter en permanence la pointe 12 vers sa position saillante. En même temps, cet angle non nul entre les directions des moments magnétiques des aimants permanents 42, 54 permet aussi de déterminer l'angle de roulis du crayon. A cet effet, le plus petit angle entre les directions des moments magnétiques des aimants 42 et 54 est, de préférence, choisi supérieure à 5° ou 10°.

Les moyens de rappel peuvent aussi être adaptés pour exercer la force de rappel directement sur la pointe 12 et non pas par l'intermédiaire de l'aimant 42.

En variante, la distance minimale qui sépare les aimants 42, 54 peut être inférieure à la distance minimale d qui sépare deux magnétomètres Mᵢⱼ. Par exemple, la distance entre les aimants 42, 54 peut être plus petite si on utilise, dans le système d'équations qui relie les mesures des magnétomètres Mᵢⱼ aux positions/orientations des dipôles, des informations ou contraintes préenregistrées sur la position des aimants l'un par rapport à l'autre. Par exemple, l'amplitude des moments magnétiques des aimants 42, 54 peut être une donnée déjà connue et préenregistrée. On peut aussi imposer la contrainte que l'angle θ est une constante connue. Par exemple, la distance entre les aimants 42, 54 est comprise entre d/3 ou d/2 et d.

Dans le cas où les moments magnétiques des aimants permanents 42 et 54 ne sont pas parallèles, en variante, la pointe ne se trouve pas nécessairement sur l'axe longitudinal du crayon. Par exemple, la pointe 12 s'étend le long de son propre axe longitudinal parallèle à l'axe longitudinal du crayon. A partir du moment où la distance entre ces deux axes longitudinaux est connue, il est possible de déterminer précisément la position de la pointe à partir de la position des aimants permanents car l'angle de roulis du crayon peut être déterminé.

L'étape 86 de calcul de l'angle α de roulis peut être omise, par exemple si la pointe 12 présente une symétrie de révolution autour de l'axe 10.

Il existe d'autre solution pour utiliser la valeur représentative de la pression exercée sur la pointe 12. Par exemple, plutôt que d'utiliser l'écart entre la distance d₀ et la distance dₐ qui sépare les aimants 42 et 54, il est possible d'utiliser une table préenregistrée associant à chaque distance dₐ mesurée la valeur Pᵣ. Il est aussi possible d'utiliser des caractéristiques préenregistrées du ressort 50, comme sa raideur et sa longueur au repos, pour calculer la valeur Pᵣ à partir de la distance dₐ.

En variante, il n'est pas non plus nécessaire de convertir la distance dₐ en une valeur Pᵣ pour commander ou compléter le relevé de la trace. Par exemple, une table préenregistrée associe à chaque valeur de la distance dₐ une valeur de l'épaisseur du trait ou de l'intensité lumineuse de la trace. Ensuite, lors de l'étape 88, l'épaisseur du trait à associer à la position de la pointe relevée est directement déterminée à partir de cette table sans calculer la valeur Pᵣ. De même, pour détecter un point de contact, la distance mesurée dₐ peut être directement comparée à un seuil S_{d} préenregistré au-delà duquel la présence d'un point de contact est détectée.

De même, dans le cas où c'est la valeur de l'angle θ qui est utilisée comme grandeur physique représentative de la pression, l'unité 30 peut utiliser une relation mathématique analogue à celle utilisée pour la translation : Pᵣ= (θ - θ₀) / (θₘₐₓ - θ₀), où :
- θ₀ est la valeur de l'angle θ en absence de pression sur la pointe 12, et
- θₘₐₓ est la valeur maximale de l'ange θ qui peut être obtenue lors d'une utilisation normale du crayon 90.

D'autres mécanismes de conversion de la translation de la pointe 12 en un mouvement de rotation de l'aimant 42 sont possibles. Par exemple, une bielle peut être utilisée à cet effet.

Il était également possible d'utiliser un mécanisme qui permet de convertir un mouvement de translation de la pointe 12 en un mouvement de translation et, à la fois, de rotation de l'aimant 42. Dans ce cas, à la fois la distance dₐ et l'angle θ peuvent être utilisé comme grandeur représentative de la pression exercée sur pointe 12.

Le crayon peut aussi incorporer un mécanisme qui déplace à la fois l'aimant 42 et l'aimant 54 par rapport au corps 8 quand la pointe 12 se déplace.

De préférence, la distance dₐ et l'angle θ varient proportionnellement à la pression exercée sur la pointe 12. Toutefois, en variante, il est possible de relier l'aimant 42 à la pointe 12 par l'intermédiaire d'un mécanisme qui assure seulement qu'il existe une relation bijective entre la pression exercée sur la pointe et la distance dₐ ou l'angle θ. Dans ce cas, la distance dₐ ou l'angle θ, utilisé comme grandeur représentative de la pression, ne varie pas nécessairement proportionnellement à la pression exercée sur la pointe 12.

En variante, un même crayon comporte plus de deux aimants permanents séparés les uns des autres par des distances supérieures à au moins à 1 mm. Ces aimants permanents supplémentaires sont soit des aimants déplacés par la pointe 12 soit des aimants fixés sans aucun degré de liberté au corps du crayon.

Le support d'écriture peut être du carton ou du tissu. Dans un autre mode de réalisation, le support d'écriture est constitué par la tablette 20. Dans ce cas, si du liquide coloré est déposé par le crayon, il l'est directement sur la face 22 de la tablette 20. Par exemple, dans ce cas, la tablette 22 est un tableau, un mur ou une fenêtre.

Si la surface du réseau de magnétomètres est suffisamment étendue, le système 2 peut comporter simultanément plusieurs crayons. Dans ce cas, le procédé décrit ci-dessus est appliqué, en parallèle, pour chacun de ces crayons. Cela permet par exemple de relever la trace de plusieurs utilisateurs écrivant simultanément sur le même support.

D'autres algorithmes pour déterminer la position et/ou l'orientation des objets magnétiques situés dans le crayon sont possibles. Par exemple, la méthode décrite dans US6269324 est utilisable. Ces méthodes n'utilisent pas nécessairement un filtre de Kalman. Par exemple, les méthodes décrites dans US2002/171427A1 ou US6263230B1 sont possibles.

L'approximation utilisée pour construire le filtre de Kalman peut aussi être une approximation quaternaire ou supérieure, c'est-à-dire que les équations de l'électromagnétisme sont approximées à un ordre supérieur à celui correspondant à l'approximation dipolaire.

Les magnétomètres du réseau de magnétomètres ne sont pas nécessairement rangés en colonnes et en lignes. Ils peuvent être agencés aussi selon d'autres motifs. Par exemple, les magnétomètres sont disposés sur chaque sommet de chaque maille triangulaire ou hexagonale d'un maillage d'un plan.

La disposition des magnétomètres les uns par rapport aux autres peut aussi être aléatoire ou non régulière. Ainsi, la distance entre deux magnétomètres immédiatement consécutifs dans le réseau n'est pas nécessairement la même pour toutes les paires de deux magnétomètres immédiatement consécutifs. Par exemple, la densité de magnétomètres dans une zone donnée du réseau peut être plus importante qu'ailleurs. Augmenter la densité dans une zone donnée peut permettre d'augmenter la précision de la mesure dans cette zone. Il est aussi possible de prévoir des zones de densité plus importante sur la périphérie du réseau pour limiter les effets de bord. Par exemple, le réseau de magnétomètres peut comporter une zone centrale dépourvue de magnétomètre. Dans ce cas, les magnétomètres sont uniquement répartis sur la périphérie de cette zone centrale et forment une bande de magnétomètres qui entoure et délimite la zone centrale. Typiquement, la largeur de cette bande est strictement inférieure à la largeur de la zone centrale mesurée selon la même direction.

Les étapes 70 à 90 n'ont pas besoin d'être exécutées immédiatement après les étapes 66 et 68 de mesure et d'acquisition de ces mesures. Au contraire, ces étapes peuvent aussi être exécutées sur des données préenregistrées.

La valeur de la grandeur physique représentative de la pression exercée sur la pointe 12 peut être utilisée uniquement pour détecter le point de contact. Dans ce cas, l'étape 88 est omise. A l'inverse, cette valeur peut être uniquement utilisée pour compléter la position du point de contact avec une information relative à la pression exercée sur cette pointe au moment où la position de ce point de contact a été enregistrée. Dans ce dernier cas, la détection du point de contact est réalisé autrement.

En variante, la face 22 d'appui n'est pas nécessairement plane. Par exemple, elle peut être ronde ou sphérique.

Dans un autre mode de réalisation, le crayon ne dépose pas de liquide ou de solide coloré sur le support d'écriture. Par exemple, le crayon est un stylet. Toutefois, même dans ce mode de réalisation, le système 2 permet de relever la trace dessiner à l'aide du stylet. De préférence, dans ce cas, le système 2 est équipé d'une interface homme-machine permettant de représenter, idéalement en temps réel, par exemple sur un écran, la trace relevée au fur et à mesure que celle-ci est relevée. Par exemple, dans ce cas, la tablette 20 est un écran sur lequel est affiché en temps réel la trace relevée.

Tout ce qui a été dit précédemment dans le cas particulier d'un crayon s'applique également au cas du relevé de la trace d'un effaceur sur le support d'écriture. L'effaceur peut être une gomme ou agir par dépôt d'un produit chimique. Comme le crayon, l'effaceur peut aussi être un simple stylet. Dans ce dernier cas, le stylet permet uniquement d'effacer des portions de la trace relevée par le système 2 sans avoir aucune action sur le liquide ou le solide coloré déposé physiquement sur le support d'écriture. Contrairement au crayon, le contact entre la pointe de l'effaceur et le support d'écriture déclenche l'effacement, dans la mémoire 34, des positions relevées pour le crayon qui sont les mêmes que celles relevées pour la pointe de l'effaceur. Dans un autre mode de réalisation, le contact entre la pointe de l'effaceur et le support d'écriture déclenche l'effacement, dans la mémoire 34, des positions relevées pour le crayon qui sont contenues à l'intérieur d'une zone de dimension prédéfinie attachée à chaque position relevée pour la pointe de l'effaceur. Par exemple, la taille de la zone de dimension prédéfinie est réglée en fonction de la valeur de la grandeur physique représentative de la pression exercée sur la pointe de l'effaceur. Cet effaceur peut être utilisé pour effacer la trace d'un crayon relevée à l'aide du système 2 ou à l'aide d'un autre système, par exemple, conventionnel.

En variante, la position du point de contact entre le support 6 et la pointe 12 est relevé à l'aide d'autres capteurs que les magnétomètres Mᵢⱼ. Par exemple, on utilise une caméra et une unité de traitement d'images programmée pour déterminer la position du point de contact entre la pointe et le support à partir des images filmées. Dans ce cas, les magnétomètres Mᵢⱼ sont uniquement utilisés pour calculer la valeur de la grandeur représentative de la pression sur la pointe 12.

## Revendications

1. Système de relevé de la trace dessinée sur un support d'écriture, ce système comprenant :
- un ustensile (4 ; 90 ; 110), choisi dans le groupe composé d'un crayon et d'un effaceur, cet ustensile comprenant :
• un corps (8) formant un moyen de préhension de l'ustensile par une main d'un utilisateur,
• une pointe (12) destinée à dessiner la trace à relever, cette pointe étant déplaçable par une force de réaction exercée par le support d'écriture lorsqu'elle vient en appui sur ce support d'écriture, entre :
- une position saillante, et
- une position rétractée dans laquelle la pointe est plus enfoncée à l'intérieur du corps que dans la position saillante,
• des moyens (50) de rappel sollicitant en permanence la pointe vers sa position saillante,
• un premier et un second aimants permanents (42, 54) distincts, le premier aimant (42) permanent étant mécaniquement relié à la pointe de manière à être déplacé en translation ou en rotation, par rapport au second aimant permanent, au fur et à mesure que la pointe est déplacée entre ses positions saillante et rétractée,
- un appareil (16) apte à enregistrer des positions successives d'un point de contact entre la pointe et le support pour former le relevé de la trace dessinée, et à utiliser une valeur d'une grandeur physique représentative de la pression exercée sur la pointe de l'ustensile pour commander ou compléter cet enregistrement, ledit appareil comportant un réseau de deux ou trois magnétomètres tri-axes reliés mécaniquement les uns aux autres sans aucun degré de liberté pour conserver une distance connue entre chacun de ces magnétomètres,
le système étant **caractérisé en ce que** l'appareil comporte :
- un réseau de magnétomètres comportant N magnétomètres tri-axes (Mᵢⱼ) reliés mécaniquement les uns aux autres sans aucun degré de liberté pour conserver une distance connue entre chacun de ces magnétomètres, où N est un nombre entier supérieur ou égal à cinq,
- un calculateur électronique (32) programmé pour :
a) déterminer, à partir des mesures des magnétomètres tri-axes, les positions des deux aimants permanents et les orientations des moments magnétiques de ces deux aimants permanents en résolvant un système prédéterminé d'équations reliant chaque mesure d'un magnétomètre tri-axe du réseau aux positions des deux aimants permanents et aux orientations des moments magnétiques de ces deux aimants permanents,
b) calculer la position relative du premier aimant permanent par rapport à la position du second aimant à partir des positions déterminées lors de l'étape a) et/ou calculer l'orientation relative du moment magnétique du premier aimant permanent par rapport à l'orientation du moment magnétique du second aimant permanent à partir des orientations déterminées lors de l'étape a), cette position et/ou orientation relatives calculées étant ensuite utilisées par l'appareil en tant que valeur de la grandeur physique représentative de la pression exercée sur la pointe.

2. Système selon la revendication 1, dans lequel le calculateur électronique (32) est également programmé pour déterminer la position à enregistrer du point de contact à partir de la position et de l'orientation du premier aimant permanent déterminée lors de l'étape a).

3. Système selon l'une quelconque des revendications précédentes, dans lequel :
- pour chaque aimant permanent (42) déplaçable par la pointe, l'ustensile comporte un guide (44) fixé sans aucun degré de liberté au corps de l'ustensile, ce guide étant apte à guider le déplacement de l'aimant permanent lorsque la pointe se déplace de manière à maintenir la position de cet aimant permanent sur un axe longitudinal (10) de l'ustensile passant par la pointe et par la position de l'autre aimant permanent (54), et
- le calculateur est programmé pour déterminer l'inclinaison de l'ustensile par rapport au support d'écriture à partir des positions déterminées lors de l'étape a) et commander le relevé de la trace en fonction de l'inclinaison déterminée.

4. Système selon l'une quelconque des revendications précédentes, dans lequel les orientations des moments magnétiques des premier et second aimants permanents (42, 54) présentent en permanence un décalage angulaire supérieur à 5° et inférieur à 175° dans un plan contenant ces deux orientations, et le calculateur électronique (32) est programmé pour déterminer l'angle de roulis de l'ustensile autour d'un axe longitudinal (10) à partir des mesures des magnétomètres du réseau et pour commander le relevé de la trace en fonction de cet angle de roulis.

5. Ustensile pour un système conforme à l'une quelconque des revendications précédentes, cet ustensile étant choisi dans le groupe composé d'un crayon et d'un effaceur, cet ustensile comprenant :
- un corps (8) formant un moyen de préhension de l'ustensile par une main d'un utilisateur,
- une pointe (12) destinée à dessiner la trace à relever, cette pointe étant déplaçable par une force de réaction exercée par le support d'écriture lorsqu'elle vient en appui sur ce support d'écriture, entre :
• une position saillante, et
• une position rétractée dans laquelle la pointe est plus enfoncée à l'intérieur du corps que dans la position saillante,
- des moyens (50) de rappel sollicitant en permanence la pointe vers sa position saillante,
- un premier et un second aimants permanents(42, 54) distincts, le premier aimant permanent (42) étant mécaniquement relié à la pointe de manière à être déplacé en translation ou en rotation, par rapport au second aimant permanent, proportionnellement au déplacement de la pointe entre ses positions saillante et rétractée,
**caractérisé en ce que** le second aimant (54) permanent est disposé dans l'ustensile de manière à ce que, quelle que soit la position de la pointe, le second aimant permanent est toujours séparé du premier aimant permanent par une distance d'au moins 1 mm.

6. Ustensile selon la revendication 5, dans lequel les moyens de rappel comportent :
• le premier aimant permanent (42), ce premier aimant permanent présentant un premier pôle tourné vers le second aimant permanent,
• le second aimant permanent (54), ce second aimant permanent présentant un premier pôle tourné vers le premier pôle du premier aimant permanent, les premiers pôles des premier et du second aimants permanents étant de même polarité et le plus petit angle entre les directions des moments magnétiques des premier et second aimants permanents étant égal à 0° ou compris entre 1° et 20°, et
• un guide (44) apte à guider le déplacement du premier aimant permanent de manière à ce que le premier pôle du premier aimant permanent se rapproche du premier pôle du second aimant permanent lorsque la pointe se déplace de sa position saillante vers sa position rétractée.

7. Ustensile selon l'une quelconque des revendications 5 à 6, dans lequel les directions des moments magnétiques des premier et second aimants permanents (42, 54) présentent un décalage angulaire en permanence supérieur à 5° et inférieur à 175° dans un plan contenant ces deux directions.

8. Appareil de détermination d'une grandeur physique représentative de la pression exercée sur la pointe d'un ustensile pour un système conforme à l'une quelconque des revendications 1 à 4, **caractérisé en ce que** l'appareil comporte :
- un réseau de magnétomètres comportant N magnétomètres tri-axes (Mᵢⱼ) reliés mécaniquement les uns aux autres sans aucun degré de liberté pour conserver une distance connue entre chacun de ces magnétomètres, ou N est un nombre entier supérieur ou égal à cinq,
- un calculateur électronique (32) programmé pour :
a) déterminer, à partir des mesures des magnétomètres tri-axes, les positions des deux aimants permanents et les orientations des moments magnétiques de ces deux aimants permanents en résolvant un système prédéterminé d'équations reliant chaque mesure d'un magnétomètre tri-axe du réseau aux positions des deux aimants permanents et aux orientations des moments magnétiques de ces deux aimants permanents,
b) calculer, la position relative du premier aimant permanent par rapport à la position du second aimant à partir des positions déterminées lors de l'étape a) et/ou calculer l'orientation relative du moment magnétique du premier aimant permanent par rapport à l'orientation du moment magnétique du second aimant permanent à partir des orientations déterminées lors de l'étape a),
c) utiliser cette position relative et/ou cette orientation relative calculées en tant que valeur de la grandeur physique représentative de la pression exercée sur la pointe pour commander ou compléter un enregistrement de positions successives d'un point de contact entre la pointe et un support d'écriture.

9. Procédé de relevé de la trace dessinée sur un support d'écriture à l'aide d'un ustensile, choisi dans le groupe composé d'un crayon et d'un effaceur, cet ustensile comprenant :
- un corps formant un moyen de préhension de l'ustensile par une main d'un utilisateur,
- une pointe destinée à dessiner, sur un support d'écriture, une trace à relever, cette pointe étant déplaçable par la force de réaction exercée par le support d'écriture lorsqu'elle vient en appui sur ce support d'écriture, entre :
• une position saillante, et
• une position rétractée dans laquelle la pointe est plus enfoncée à l'intérieur du corps que dans la position saillante,
- des moyens de rappel sollicitant en permanence la pointe vers sa position saillante,
- un premier et un second aimants permanents distincts, le premier aimant permanent étant mécaniquement relié à la pointe de manière à être déplacé en translation ou en rotation, par rapport au second aimant permanent, au fur et à mesure que la pointe est déplacée entre ses positions saillante et rétractée,
ce procédé comportant :
a) l'enregistrement (84) de positions successives d'un point de contact entre la pointe et le support pour former le relevé de la trace dessinée, et
b) l'utilisation (76, 80, 88) d'une valeur d'une grandeur physique représentative de la pression exercée sur la pointe de l'ustensile pour commander ou compléter cet enregistrement,
le procédé comprenant:
c) la mesure (66) du champ magnétique des premier et second aimants permanent par chaque magnétomètre tri-axes d'un réseau de magnétomètres comportant N magnétomètres tri-axes reliés mécaniquement les uns aux autres sans aucun degré de liberté pour conserver une distance connue entre chacun de ces magnétomètres, où N est un nombre entier supérieur ou égal à cinq,
d) la détermination (70), à partir des mesures des magnétomètres tri-axes, des positions des deux aimants permanents et des orientations des moments magnétiques de ces deux aimants permanents en résolvant un système prédéterminé d'équations reliant chaque mesure d'un magnétomètre tri-axe du réseau aux positions des deux aimants permanents et aux orientations des moments magnétiques de ces deux aimants permanents,
e) le calcul (72) de la position relative du premier aimant permanent par rapport à la position du second aimant à partir des positions déterminées lors de l'étape d) et/ou le calcul de l'orientation relative du moment magnétique du premier aimant permanent par rapport à l'orientation du moment magnétique du second aimant permanent à partir des orientations déterminées lors de l'étape d), cette position et/ou orientation relatives calculées étant ensuite utilisées lors de l'étape b) en tant que valeur de la grandeur physique représentative de la pression exercée sur la pointe.

10. Procédé selon la revendication 9, dans lequel l'étape b) comprend :
- la comparaison (76) de la grandeur physique représentative de la pression exercée sur la pointe à un seuil de contact prédéterminé,
- la détection (80) d'un point de contact entre la pointe et le support d'écriture si ce seuil de contact est franchi et, dans le cas contraire, l'absence de détection du point de contact, et
- la commande (84) de l'enregistrement de la position d'un point de contact pour former le relevé de la trace uniquement si un point de contact est détecté.

11. Procédé selon la revendication 9 ou 10, dans lequel l'étape b) comprend le réglage (90) de l'épaisseur de la trace relevée en fonction de la valeur de la grandeur physique représentative de la pression exercée sur la pointe ou le réglage (90) de l'intensité lumineuse ou de la transparence de la trace relevée en fonction de la valeur de la grandeur physique représentative de la pression exercée sur la pointe.

12. Support (34) d'enregistrement d'informations, **caractérisé en ce qu'**il comporte des instructions pour la réalisation des étapes d) et e) d'un procédé conforme à l'une quelconque des revendications 9 à 11, lorsque ces instructions sont exécutées par un calculateur électronique.

## Patentansprüche

1. System zur Erfassung der auf einer Schreibunterlage gezeichneten Spur, wobei dieses System umfasst:
- ein Werkzeug (4; 90; 110), das aus der Gruppe ausgewählt ist, die aus einem Schreibstift und einem Löscher besteht, wobei dieses Werkzeug umfasst:
• einen Körper (8), der ein Mittel zum Ergreifen des Werkzeugs durch eine Hand eines Benutzers bildet,
• eine Spitze (12), die dazu bestimmt ist, die zu erfassende Spur zu zeichnen, wobei diese Spitze durch eine von der Schreibunterlage ausgeübte Reaktionskraft verschiebbar ist, wenn sie auf dieser Schreibunterlage zur Anlage kommt, zwischen:
- einer vorstehenden Position und
- einer zurückgezogenen Position, in welcher die Spitze weiter ins Innere des Körpers eingedrückt ist als in der vorstehenden Position,
• Rückholmittel (50), welche die Spitze ständig in Richtung ihrer vorstehenden Position beaufschlagen,
• einen ersten und einen zweiten Permanentmagneten (42, 54), die verschieden sind, wobei der erste Permanentmagnet (42) mechanisch mit der Spitze so verbunden ist, dass er in dem Maße, wie die Spitze zwischen ihrer vorstehenden und ihrer zurückgezogenen Position bewegt wird, translatorisch oder rotatorisch bezüglich des zweiten Permanentmagneten bewegt wird,
- eine Vorrichtung (16), die geeignet ist, aufeinander folgende Positionen eines Kontaktpunktes zwischen der Spitze und der Unterlage aufzuzeichnen, um die Erfassung der gezeichneten Spur vorzunehmen, und einen Wert einer physikalischen Größe, die für den auf die Spitze des Werkzeugs ausgeübten Druck repräsentativ ist, zu verwenden, um diese Aufzeichnung zu steuern oder zu vervollständigen,
wobei die Vorrichtung ein Netz von zwei oder drei dreiachsigen Magnetometern aufweist, die ohne jeden Freiheitsgrad mechanisch miteinander verbunden sind, um zwischen diesen Magnetometern jeweils einen bekannten Abstand aufrechtzuerhalten,
wobei das System **dadurch gekennzeichnet ist, dass** die Vorrichtung aufweist:
- ein Netz von Magnetometern, das N dreiachsige Magnetometer (Mᵢⱼ) umfasst, die ohne jeden Freiheitsgrad mechanisch miteinander verbunden sind, um zwischen diesen Magnetometern jeweils einen bekannten Abstand aufrechtzuerhalten, wobei N eine ganze Zahl ist, die größer als oder gleich fünf ist,
- einen elektronischen Rechner (32), der dafür programmiert ist,
a) aus den Messungen der dreiachsigen Magnetometer die Positionen der beiden Permanentmagnete und die Ausrichtungen der magnetischen Momente dieser beiden Permanentmagnete durch Lösen eines vorbestimmten Gleichungssystems zu bestimmen, das jede Messung eines dreiachsigen Magnetometers des Netzes mit den Positionen der beiden Permanentmagnete und mit den Ausrichtungen der magnetischen Momente dieser beiden Permanentmagnete verknüpft,
b) die relative Position des ersten Permanentmagneten bezüglich der Position des zweiten Magneten aus den Positionen zu berechnen, die in Schritt a) bestimmt wurden, und/oder die relative Ausrichtung des magnetischen Moments des ersten Permanentmagneten bezüglich der Ausrichtung des magnetischen Moments des zweiten Permanentmagneten aus den Ausrichtungen zu berechnen, die in Schritt a) bestimmt wurden, wobei diese berechnete relative Position und/oder Ausrichtung anschließend von der Vorrichtung als Wert der physikalischen Größe verwendet werden/wird, die für den auf die Spitze ausgeübten Druck repräsentativ ist.

2. System nach Anspruch 1, wobei der elektronische Rechner (32) außerdem dafür programmiert ist, die aufzuzeichnende Position des Kontaktpunktes aus der Position und der Ausrichtung des ersten Permanentmagneten zu bestimmen, die in Schritt a) bestimmt wurden.

3. System nach einem der vorhergehenden Ansprüche, wobei:
- für jeden Permanentmagneten (42), der durch die Spitze bewegbar ist, das Werkzeug eine Führung (44) aufweist, die ohne jeden Freiheitsgrad am Körper des Werkzeugs befestigt ist, wobei diese Führung geeignet ist, die Bewegung des Permanentmagneten, wenn sich die Spitze bewegt, so zu führen, dass die Position dieses Permanentmagneten auf einer Längsachse (10) des Werkzeugs gehalten wird, die durch die Spitze und durch die Position des anderen Permanentmagneten (54) verläuft, und
- der Rechner dafür programmiert ist, die Neigung des Werkzeugs bezüglich der Schreibunterlage aus den Positionen zu bestimmen, die in Schritt a) bestimmt wurden, und die Erfassung der Spur in Abhängigkeit von der bestimmten Neigung zu steuern.

4. System nach einem der vorhergehenden Ansprüche, wobei die Ausrichtungen der magnetischen Momente dieses ersten und zweiten Permanentmagneten (42, 54) ständig einen Winkelversatz aufweisen, der in einer diese beiden Ausrichtungen enthaltenden Ebene größer als 5° und kleiner als 175° ist, und der elektronische Rechner (32) dafür programmiert ist, den Rollwinkel des Werkzeugs um eine Längsachse (10) aus Messungen der Magnetometer des Netzes zu bestimmen und die Erfassung der Spur in Abhängigkeit von diesem Rollwinkel zu steuern.

5. Werkzeug für ein System gemäß einem der vorhergehenden Ansprüche, wobei dieses Werkzeug aus der Gruppe ausgewählt ist, die aus einem Schreibstift und einem Löscher besteht, wobei dieses Werkzeug umfasst:
- einen Körper (8), der ein Mittel zum Ergreifen des Werkzeugs durch eine Hand eines Benutzers bildet,
- eine Spitze (12), die dazu bestimmt ist, die zu erfassende Spur zu zeichnen, wobei diese Spitze durch eine von der Schreibunterlage ausgeübte Reaktionskraft verschiebbar ist, wenn sie auf dieser Schreibunterlage zur Anlage kommt, zwischen:
• einer vorstehenden Position und
• einer zurückgezogenen Position, in welcher die Spitze weiter ins Innere des Körpers eingedrückt ist als in der vorstehenden Position,
- Rückholmittel (50), welche die Spitze ständig in Richtung ihrer vorstehenden Position beaufschlagen,
- einen ersten und einen zweiten Permanentmagneten (42, 54), die verschieden sind, wobei der erste Permanentmagnet (42) mechanisch mit der Spitze so verbunden ist, dass er proportional zur Bewegung der Spitze zwischen ihrer vorstehenden und ihrer zurückgezogenen Position translatorisch oder rotatorisch bezüglich des zweiten Permanentmagneten bewegt wird,
**dadurch gekennzeichnet, dass** der zweite Permanentmagnet (54) in dem Werkzeug derart angeordnet ist, dass unabhängig von der Position der Spitze der zweite Permanentmagnet von dem ersten Permanentmagneten immer durch einen Abstand von wenigstens 1 mm getrennt ist.

6. Werkzeug nach Anspruch 5, wobei die Rückholmittel umfassen:
• den ersten Permanentmagneten (42), wobei dieser erste Permanentmagnet einen ersten Pol aufweist, der dem zweiten Permanentmagneten zugewandt ist,
• den zweien Permanentmagneten (54), wobei dieser zweite Permanentmagnet einen ersten Pol aufweist, der dem ersten Pol des ersten Permanentmagneten zugewandt ist, wobei die ersten Pole des ersten und des zweiten Permanentmagneten dieselbe Polarität haben und der kleinste Winkel zwischen den Richtungen der magnetischen Momente des ersten und zweiten Permanentmagneten gleich 0° ist oder zwischen 1° und 20° liegt, und
• eine Führung (44), die geeignet ist, die Bewegung des ersten Permanentmagneten so zu führen, dass sich der erste Pol des ersten Permanentmagneten dem ersten Pol des zweiten Permanentmagneten nähert, wenn sich die Spitze aus ihrer vorstehenden Position in Richtung ihrer zurückgezogenen Position bewegt.

7. Werkzeug nach einem der Ansprüche 5 bis 6, wobei die Richtungen der magnetischen Momente des ersten und zweiten Permanentmagneten (42, 54) einen Winkelversatz aufweisen, der in einer diese beiden Richtungen enthaltenden Ebene ständig größer als 5° und kleiner als 175° ist.

8. Vorrichtung zur Bestimmung einer physikalischen Größe, die für den auf die Spitze eines Werkzeugs ausgeübten Druck repräsentativ ist, für ein System gemäß einem der Ansprüche 1 bis 4, **dadurch gekennzeichnet, dass** die Vorrichtung aufweist:
- ein Netz von Magnetometern, das N dreiachsige Magnetometer (Mᵢⱼ) umfasst, die ohne jeden Freiheitsgrad mechanisch miteinander verbunden sind, um zwischen diesen Magnetometern jeweils einen bekannten Abstand aufrechtzuerhalten, wobei N eine ganze Zahl ist, die größer als oder gleich fünf ist,
- einen elektronischen Rechner (32), der dafür programmiert ist,
a) aus den Messungen der dreiachsigen Magnetometer die Positionen der beiden Permanentmagnete und die Ausrichtungen der magnetischen Momente dieser beiden Permanentmagnete durch Lösen eines vorbestimmten Gleichungssystems zu bestimmen, das jede Messung eines dreiachsigen Magnetometers des Netzes mit den Positionen der beiden Permanentmagnete und mit den Ausrichtungen der magnetischen Momente dieser beiden Permanentmagnete verknüpft,
b) die relative Position des ersten Permanentmagneten bezüglich der Position des zweiten Magneten aus den Positionen zu berechnen, die in Schritt a) bestimmt wurden, und/oder die relative Ausrichtung des magnetischen Moments des ersten Permanentmagneten bezüglich der Ausrichtung des magnetischen Moments des zweiten Permanentmagneten aus den Ausrichtungen zu berechnen, die in Schritt a) bestimmt wurden,
c) diese relative Position und/oder diese relative Ausrichtung, die berechnet wurde(n), als Wert der physikalischen Größe zu verwenden, die für den auf die Spitze ausgeübten Druck repräsentativ ist, um eine Aufzeichnung aufeinander folgender Positionen eines Kontaktpunktes zwischen der Spitze und einer Schreibunterlage zu steuern oder zu vervollständigen.

9. Verfahren zur Erfassung der Spur, die auf einer Schreibunterlage mithilfe eines Werkzeugs gezeichnet wurde, das aus der Gruppe ausgewählt ist, die aus einem Schreibstift und einem Löscher besteht, wobei dieses Werkzeug umfasst:
- einen Körper, der ein Mittel zum Ergreifen des Werkzeugs durch eine Hand eines Benutzers bildet,
- eine Spitze, die dazu bestimmt ist, auf einer Schreibunterlage eine zu erfassende Spur zu zeichnen, wobei diese Spitze durch die von der Schreibunterlage ausgeübte Reaktionskraft verschiebbar ist, wenn sie auf dieser Schreibunterlage zur Anlage kommt, zwischen:
• einer vorstehenden Position und
• einer zurückgezogenen Position, in welcher die Spitze weiter ins Innere des Körpers eingedrückt ist als in der vorstehenden Position,
- Rückholmittel, welche die Spitze ständig in Richtung ihrer vorstehenden Position beaufschlagen,
- einen ersten und einen zweiten Permanentmagneten, die verschieden sind, wobei der erste Permanentmagnet mechanisch mit der Spitze so verbunden ist, dass er in dem Maße, wie die Spitze zwischen ihrer vorstehenden und ihrer zurückgezogenen Position bewegt wird, translatorisch oder rotatorisch bezüglich des zweiten Permanentmagneten bewegt wird,
wobei dieses Verfahren beinhaltet:
a) die Aufzeichnung (84) von aufeinander folgenden Positionen eines Kontaktpunktes zwischen der Spitze und der Unterlage, um die Erfassung der gezeichneten Spur vorzunehmen, und
b) die Verwendung (76, 80, 88) eines Wertes einer physikalischen Größe, die für den auf die Spitze des Werkzeugs ausgeübten Druck repräsentativ ist, um diese Aufzeichnung zu steuern oder zu vervollständigen,
wobei das Verfahren umfasst:
c) die Messung (66) des Magnetfeldes des ersten und des zweiten Permanentmagneten durch jedes dreiachsige Magnetometer eines Netzes von Magnetometern, das N dreiachsige Magnetometer umfasst, die ohne jeden Freiheitsgrad mechanisch miteinander verbunden sind, um zwischen diesen Magnetometern jeweils einen bekannten Abstand aufrechtzuerhalten, wobei N eine ganze Zahl ist, die größer als oder gleich fünf ist,
d) die Bestimmung (70), aus den Messungen der dreiachsigen Magnetometer, der Positionen der beiden Permanentmagnete und der Ausrichtungen der magnetischen Momente dieser beiden Permanentmagnete durch Lösen eines vorbestimmten Gleichungssystems, das jede Messung eines dreiachsigen Magnetometers des Netzes mit den Positionen der beiden Permanentmagnete und mit den Ausrichtungen der magnetischen Momente dieser beiden Permanentmagnete verknüpft,
e) die Berechnung (72) der relativen Position des ersten Permanentmagneten bezüglich der Position des zweiten Magneten aus den Positionen, die in Schritt d) bestimmt wurden, und/oder die Berechnung der relativen Ausrichtung des magnetischen Moments des ersten Permanentmagneten bezüglich der Ausrichtung des magnetischen Moments des zweiten Permanentmagneten aus den Ausrichtungen, die in Schritt d) bestimmt wurden, wobei diese berechnete relative Position und/oder Ausrichtung anschließend in Schritt b) als Wert der physikalischen Größe verwendet werden/wird, die für den auf die Spitze ausgeübten Druck repräsentativ ist.

10. Verfahren nach Anspruch 9, wobei Schritt b) umfasst:
- den Vergleich (76) der physikalischen Größe, die für den auf die Spitze ausgeübten Druck repräsentativ ist, mit einem vorbestimmten Kontakt-Schwellenwert,
- die Erkennung (80) eines Kontaktpunktes zwischen der Spitze und der Schreibunterlage, falls dieser Kontakt-Schwellenwert überschritten wird, und im gegenteiligen Fall das Nichterfolgen einer Erkennung des Kontaktpunktes, und
- die Steuerung (84) der Aufzeichnung der Position eines Kontaktpunktes, um die Erfassung der Spur vorzunehmen, nur dann, wenn ein Kontaktpunkt erkannt wurde.

11. Verfahren nach Anspruch 9 oder 10, wobei Schritt b) die Regelung (90) der Dicke der erfassten Spur in Abhängigkeit vom Wert der physikalischen Größe, die für den auf die Spitze ausgeübten Druck repräsentativ ist, oder die Regelung (90) der Lichtintensität oder der Lichtdurchlässigkeit der erfassten Spur in Abhängigkeit vom Wert der physikalischen Größe, die für den auf die Spitze ausgeübten Druck repräsentativ ist, umfasst.

12. Informationsaufzeichnungsmedium (34), **dadurch gekennzeichnet, dass** es Anweisungen zur Ausführung der Schritte d) und e) eines Verfahrens gemäß einem der Ansprüche 9 bis 11, wenn diese Anweisungen von einem elektronischen Rechner ausgeführt werden, umfasst.

## Claims

1. System for plotting the mark drawn on a writing medium, said system comprising:
- a tool (4; 90; 110), chosen from the group composed of a pencil and an eraser, said tool comprising:
• a body (8) forming a means for grasping the tool with a hand of a user,
• a tip (12) intended to draw the mark to be plotted, said tip being movable by a reactive force exerted by the writing medium when said tip comes to rest on said writing medium, between:
- a prominent position and
- a retracted position in which the tip is pushed inside the body more than in the prominent position,
• return means (50) continually driving the tip towards its prominent position,
• a first and a second, separate, permanent magnet (42, 54), the first permanent magnet (42) being mechanically linked to the tip so as to be moved translationally or rotationally, in relation to the second permanent magnet, as the tip is moved between its prominent and retracted positions,
- an appliance (16) that is capable of recording successive positions for a point of contact between the tip and the medium in order to form the plot of the drawn mark, and of using a value of a physical quantity that is representative of the pressure exerted on the tip of the tool in order to control or complete said recording, said appliance having a network of two or three triaxial magnetometers that are mechanically linked to one another without any degree of freedom in order to preserve a known distance between each of said magnetometers,
the system being **characterized in that** the appliance has:
- a network of magnetometers having N triaxial magnetometers (Mᵢⱼ) that are mechanically linked to one another without any degree of freedom in order to preserve a known distance between each of said magnetometers, where N is an integer greater than or equal to five,
- an electronic computer (32) that is programmed in order to:
a) determine, from the measurements from the triaxial magnetometers, the positions of the two permanent magnets and the orientations of the magnetic moments of these two permanent magnets by resolving a predetermined system of equations linking each measurement from a triaxial magnetometer in the network to the positions of the two permanent magnets and to the orientations of the magnetic moments of said two permanent magnets,
b) calculate the relative position of the first permanent magnet in relation to the position of the second magnet from the positions determined in step a) and/or calculate the relative orientation of the magnetic moment of the first permanent magnet in relation to the orientation of the magnetic moment of the second permanent magnet from the orientations determined in step a), said calculated relative position and/or orientation then being used by the appliance as a value of the physical quantity that is representative of the pressure exerted on the tip.

2. System according to Claim 1, in which the electronic computer (32) is likewise programmed in order to determine the position to be recorded for the point of contact from the position and the orientation of the first permanent magnet determined in step a).

3. System according to either of the preceding claims, in which:
- for each permanent magnet (42) that is movable by the tip, the tool has a guide (44) that is fixed without any degree of freedom to the body of the tool, said guide being capable of guiding the movement of the permanent magnet when the tip moves so as to maintain the position of said permanent magnet on a longitudinal axis (10) of the tool passing through the tip and through the position of the other permanent magnet (54), and
- the computer is programmed in order to determine the inclination of the tool in relation to the writing medium from the positions determined in step a) and to control the plotting of the mark on the basis of the determined inclination.

4. System according to any one of the preceding claims, in which the orientations of the magnetic moments of the first and second permanent magnets (42, 54) continually exhibit an angular shift greater than 5° and less than 175° in a plane containing said two orientations, and the electronic computer (32) is programmed in order to determine the angle of roll of the tool about a longitudinal axis (10) from the measurements from the magnetometers in the network and in order to control the plotting of the mark on the basis of said angle of roll.

5. Tool for a system according to any one of the preceding claims, said tool being chosen from the group composed of a pencil and an eraser, said tool comprising:
- a body (8) forming a means for grasping the tool with a hand of a user,
- a tip (12) intended to draw the mark to be plotted, said tip being movable by a reactive force exerted by the writing medium when said tip comes to rest on said writing medium, between:
• a prominent position and
• a retracted position in which the tip is pushed inside the body more than in the prominent position,
- return means (50) continually driving the tip towards its prominent position,
- a first and a second, separate, permanent magnet (42, 54), the first permanent magnet (42) being mechanically linked to the tip so as to be moved translationally or rotationally, in relation to the second permanent magnet, in proportion with the movement of the tip between its prominent and retracted positions,
**characterized in that** the second permanent magnet (54) is arranged in the tool so that, whatever the position of the tip, the second permanent magnet is always separated from the first permanent magnet by a distance of at least 1 mm.

6. Tool according to Claim 5, in which the return means have:
• the first permanent magnet (42), said first permanent magnet exhibiting a first pole that is turned towards the second permanent magnet,
• the second permanent magnet (54), said second permanent magnet exhibiting a first pole that is turned towards the first pole of the first permanent magnet, the first poles of the first and second permanent magnets being of the same polarity and the smallest angle between the directions of the magnetic moments of the first and second permanent magnets being equal to 0° or between 1° and 20°, and
• a guide (44) that is capable of guiding the movement of the first permanent magnet so that the first pole of the first permanent magnet approaches the first pole of the second permanent magnet when the tip moves from its prominent position towards its retracted position.

7. Tool according to either of Claims 5 and 6, in which the directions of the magnetic moments of the first and second permanent magnets (42, 54) exhibit an angular shift that is continually greater than 5° and less than 175° in a plane containing said two directions.

8. Appliance for determining a physical quantity that is representative of the pressure exerted on the tip of a tool for a system according to any one of Claims 1 to 4, **characterized in that** the appliance has:
- a network of magnetometers having N triaxial magnetometers (Mᵢⱼ) that are mechanically linked to one another without any degree of freedom in order to preserve a known distance between each of said magnetometers, where N is an integer greater than or equal to five,
- an electronic computer (32) that is programmed in order to:
a) determine, from the measurements from the triaxial magnetometers, the positions of the two permanent magnets and the orientations of the magnetic moments of these two permanent magnets by resolving a predetermined system of equations linking each measurement from a triaxial magnetometer in the network to the positions of the two permanent magnets and to the orientations of the magnetic moments of said two permanent magnets,
b) calculate the relative position of the first permanent magnet in relation to the position of the second magnet from the positions determined in step a) and/or calculate the relative orientation of the magnetic moment of the first permanent magnet in relation to the orientation of the magnetic moment of the second permanent magnet from the orientations determined in step a),
c) use said calculated relative position and/or said calculated relative orientation as a value of the physical quantity that is representative of the pressure exerted on the tip in order to control or complete a recording of successive positions of a point of contact between the tip and a writing medium.

9. Method for plotting the mark drawn on a writing medium using a tool, chosen from the group composed of a pencil and an eraser, said tool comprising:
- a body forming a means for grasping the tool with a hand of a user,
- a tip intended to draw, on a writing medium, a mark to be plotted, said tip being movable by the reactive force exerted by the writing medium when said tip comes to rest on said writing medium, between:
• a prominent position and
• a retracted position in which the tip is pushed inside the body more than in the prominent position,
- return means continually driving the tip towards its prominent position,
- a first and a second, separate, permanent magnet, the first permanent magnet being mechanically linked to the tip so as to be moved translationally or rotationally, in relation to the second permanent magnet, as the tip is moved between its prominent and retracted positions,
said method involving:
a) the recording (84) of successive positions of a point of contact between the tip and the medium in order to form the plot of the drawn mark, and
b) the use (76, 80, 88) of a value of physical quantity that is representative of the pressure exerted on the tip of the tool in order to control or complete said recording, **characterized in that** said method comprises:
c) the measurement (66) of the magnetic field of the first and second permanent magnets by each triaxial magnetometer in a network of magnetometers having N triaxial magnetometers that are mechanically linked to one another without any degree of freedom in order to preserve a known distance between each of said magnetometers, where N is an integer greater than or equal to five,
d) the determination (70), from the measurements from the triaxial magnetometers, of the positions of the two permanent magnets and of the orientations of the magnetic moments of said two permanent magnets by resolving a predetermined system of equations linking each measurement from a triaxial magnetometer in a network to the positions of the two permanent magnets and to the orientations of the magnetic moments of said two permanent magnets,
e) the calculation (72) of the relative position of the first permanent magnet in relation to the position of the second magnet from the positions determined in step d) and/or the calculation of the relative orientation of the magnetic moment of the first permanent magnet in relation to the orientation of the magnetic moment of the second permanent magnet from the orientations determined in step d), said calculated relative position and/or orientation then being used in step b) as a value of the physical quantity that is representative of the pressure exerted on the tip.

10. Method according to Claim 9, in which step b) comprises:
- the comparison (76) of the physical quantity that is representative of the pressure exerted on the tip at a predetermined contact threshold,
- the detection (80) of a point of contact between the tip and the writing medium if said contact threshold is crossed and, in the opposite case, the absence of detection of the contact point, and
- the control (84) of the recording of the position of a contact point in order to form the plot of the mark only if a contact point is detected.

11. Method according to Claim 9 or 10, in which step b) comprises the adjustment (90) of the thickness of the plotted mark on the basis of the value of the physical quantity that is representative of the pressure exerted on the tip or the adjustment (90) of the luminous intensity or of the transparency of the plotted mark on the basis of the value of the physical quantity that is representative of the pressure exerted on the tip.

12. Information recording medium (34), **characterized in that** it has instructions for realizing steps d) and e) of a method according to any one of Claims 9 to 11 when said instructions are executed by an electronic computer.
